# FASCICULE DE BREVET EUROPEEN

(11) **EP 4 064 849 B1**
(45) Date de publication et mention de la délivrance du brevet: **16.04.2025**
(21) Numéro de dépôt: 20810999.1
(22) Date de dépôt: 26.11.2020
(51) Int. Cl.: A23D 9/04, C11C 1/00, C11C 3/00, C11C 3/02, A23D 9/013, C11B 3/14, C11B 5/00

(54) **COMPOSITION D'HUILE DE MICRO-ORGANISMES ENRICHIE EN ACIDES GRAS POLYINSATURES**
MIT MEHRFACH UNGESÄTTIGTEN FETTSÄUREN ANGEREICHERTE MIKROORGANISMENÖLZUSAMMENSETZUNG
MICROORGANISM OIL COMPOSITION ENRICHED IN POLYUNSATURATED FATTY ACIDS

(30) Priorité: 26.11.2019 FR 1913255
(43) Date de publication de la demande: 05.10.2022
(73) Titulaire: Polaris, 29000 Quimper (FR)
(72) Inventeur: LENNON, Stéphanie, 29000 QUIMPER (FR); LARVOL, Lionel, 29000 QUIMPER (FR); BRETON, Gildas, 29000 QUIMPER (FR)
(74) Mandataire: Cabinet Le Guen Maillet
(86) Numéro de dépôt international: PCT/EP2020/083475
(87) Numéro de publication internationale: WO 2021/105267

(56) Documents cités:
- WO-A1-2011/074758
- WO-A1-2019/201478
- US-A1- 2014 323 569
- ZHAOMIN SUN ET AL: "Preparation of Triacylglycerols Enriched in DHA from Single Cell Glycerides via Molecular Distillation and Enzymatic Glycerolysis", JOURNAL OF AQUATIC FOOD PRODUCT TECHNOLOGY, vol. 24, no. 8, 17 November 2015 (2015-11-17), US, pages 796 - 806, XP055402850, ISSN: 1049-8850, DOI: 10.1080/10498850.2013.813613

## Description

Depuis plusieurs années déjà, il est recommandé d'enrichir son régime alimentaire en acides gras polyinsaturés en raison de leur rôle bénéfique avéré dans bon nombre de réactions physiologiques et fonctions pharmaceutiques.

Parmi les acides gras polyinsaturés d'intérêt on distingue ceux appartenant à la famille des omegas-3 tels que l'acide eicosapentaénoïque (EPA) et l'acide docosahexaénoïque (DHA) et ceux appartenant à la famille des omegas-6 tels que l'acide arachidonique (ARA).

Le DHA et l'EPA ont fait l'objet de nombreuses études physiologiques et l'on connait aujourd'hui leur rôle essentiel à la fois chez le nourrisson, l'enfant et l'adulte. Le DHA est ainsi connu pour son rôle essentiel dans le développement du cerveau et de la rétine et dans la préservation des fonctions cognitives. L'EPA, quant à lui, contribue au bon fonctionnement cardiaque et possède des propriétés anti-inflammatoires.

Les régimes alimentaires les plus riches en acides gras polyinsaturés sont d'origine marine, avec une consommation régulière de poissons. Cependant la quantité de poisson devant être consommée doit être importante pour obtenir les effets thérapeutiques attendus.

Une manière d'augmenter l'apport en acides gras polyinsaturés est de consommer des suppléments alimentaires ou des concentrés à base d'huile de poisson. Ces produits se présentent sous la forme d'huiles naturelles ou d'huiles concentrées en DHA ou en EPA sous forme de triglycérides ou sous forme d'esters éthyliques.

Dans les huiles de poisson, les acides gras polyinsaturés se trouvent principalement sous forme de triglycérides. Les méthodes de concentrations en DHA ou EPA des huiles de poissons font intervenir dans un premier temps la séparation des acides gras du glycérol par transestérification éthanolique à l'aide d'un catalyseur chimique ou par transestérification éthanolique enzymatique. Dans un second temps, l'enrichissement en DHA ou en EPA est réalisé par distillation moléculaire, permettant la séparation des composés en fonction de leur poids moléculaire.

Le brevet français FR 2 955 459 décrit par exemple un procédé d'enrichissement d'une huile de poisson en DHA se présentant essentiellement sous la forme de monoglycérides. Le procédé comprend une étape d'éthanolyse enzymatique réalisée en présence d'une enzyme lysant spécifiquement les acides gras en position (1/3) sur le glycérol. Le DHA se trouvant majoritairement en position sn2, le procédé permet d'éliminer les autres acides gras polyinsaturés. Les esters éthyliques d'acides gras et l'éthanol se trouvent éliminés lors d'une étape ultérieure de distillation sous vide.

Cependant, aux vues de la demande croissante en acides gras polyinsaturés, les huiles de poissons ne peuvent plus servir d'unique source. En outre, elles présentent des caractéristiques de goût et d'odeur déplaisantes pour de nombreux consommateurs, et des teneurs potentiellement élevées en cholestérol. Enfin, on constate une irrégularité en termes de production d'acides gras en fonction des saisons.

Il est devenu nécessaire d'identifier des alternatives aux huiles de poissons pour la production d'acides gras.

Les micro-algues présentent elles aussi des teneurs élevées en acides gras polyinsaturés et représentent donc une source alternative intéressante. Certaines d'entre elles peuvent produire des quantités d'acides gras polyinsaturés représentant jusqu'à 40 à 50 % de leur biomasse. De plus, elles présentent l'avantage de pouvoir être cultivées en conditions contrôlées. Les micro-algues marines ne présentent pas les caractéristiques négatives d'odeur et de goût des huiles de poisson. Elles ne produisent pas non plus de cholestérol. Les micro-algues appartenant au genre des Thraustochytrium ou des Schizochytrium sont des sources riches en acides gras polyinsaturés à longue chaîne oméga-3. Par exemple, la micro-algue Schizochytrium sp peut produire entre 20 % et 35 % d'acide docosahexaénoïque, en poids total d'acides gras (Hadley et al., 2017) (Hammond et al., 2001).

A titre illustratif, on citera la demande de brevet internationale WO 2013/178936 qui décrit un procédé d'enrichissement en DHA sous forme d'esters éthyliques d'une huile de micro-algues appartenant à la famille des Thraustochytriales sp.

D'autres documents tels que la demande de brevet internationale WO 2011/074758 ou Zhaomin Sun et al. (Journal of aquatic food product technology, vol. 24, n°8, 2015) décrivent également des compositions d'huile de micro-organismes enrichies en acides gras polyinsaturés.

Un autre élément important qualitatif de l'huile, outre la teneur en acides gras polyinsaturés susceptible d'être obtenue, est la teneur en acides gras saturés. En effet, plusieurs études ont démontré un lien entre la consommation d'acides gras saturés et les risques de maladies cardiovasculaires ou d'hypercholestérolémie. Si leur consommation n'est pas totalement à bannir, il est toutefois recommandé de la limiter au profit des acides gras insaturés.

Il apparait donc nécessaire de pouvoir proposer des huiles concentrées en acides gras polyinsaturés, notamment en oméga-3 tels que le DHA et l'EPA, qui présentent de plus une teneur limitée en acides gras saturés.

Par ailleurs, la bonne supplémentation en une substance ne dépend pas uniquement de la quantité de cette substance, mais également de sa biodisponibilité. Des études ont prouvé que l'absorption des acides gras polyinsaturés à longue chaîne issus d'huile de poisson sous la forme de triglycérides dits reconstitués était supérieure à celle des acides gras sous la forme des triglycérides naturels ou sous la forme d'éthyl esters (Schuchardt et al. ; Prostaglandins, leukotrienes and essential fatty acids ; 89 (2013) 1-8). Les triglycérides reconstitués sont obtenus à partir des triglycérides naturels des huiles par des méthodes de transestérification/ré-estrérification. Dans ces méthodes, les acides gras sont transférés sous forme d'esters éthyliques (fatty acid ethyl esters en anglais), ou, puis subissent une distillation moléculaire de manière à concentrer la fraction en acides gras polyinsaturés à longue chaîne. Ces acides gras sont ensuite convertis, par voie enzymatique, sous la forme de glycérides, notamment de triglycérides.

De plus, une étude réalisée par Fumiaki et al. (Lymphatic absorption of docosahexaenoic acid given as monoglyceride, diglyceride, triglyceride and ethyl ester in rats ; J. Nutr. Sci. Vitaminol ; 48, 30-35, 2002), a montré que le dosage lymphatique de DHA préalablement ingéré sous forme de mono et diglycérides était supérieur à celui obtenu avec du DHA préalablement ingéré sous forme de triglycérides et d'éthyl esters. La bonne biodisponibilité des acides gras polyinsaturés à longue chaîne sous forme de monoglycérides a également été vérifiée dans une autre étude (Valenzuleaa et al.). Cette étude montre que la supplémentation en monoglycérides de DHA permet de retrouver un contenu en DHA dans le plasma et les globules rouges plus élevé que ce qui est retrouvé lorsque le DHA est apporté sous forme d'esters éthyliques (Effect of Supplementation with Docosahexaenoic Acid Ethyl Ester and sn-2 Docosahexaenyl Monoacylglyceride on Plasma and Erythrocyte Fatty Acids in Rats, Ann Nutr Metab, 2005 ;49 :49-53).

Il apparait donc également nécessaire de pouvoir proposer des huiles concentrées en acides gras polyinsaturés, notamment en oméga-3, qui se présentent essentiellement sous la forme de triglycérides, diglycérides et monoglycérides.

La présente invention concerne ainsi une composition d'huile de micro-organismes enrichie en acides gras polyinsaturés, qui se caractérise en ce qu'elle présente :
- une teneur en acides gras saturés inférieure ou égale à 40 mg/g de composition,
- une teneur en acides gras polyinsaturés oméga-3 supérieure ou égale à 500 mg/g de composition,
et en ce qu'elle comprend, par rapport à la quantité totale de monoglycérides, diglycérides, triglycérides et esters éthyliques d'acides gras :
- une quantité de triglycérides inférieure à 70 %,
- une quantité de diglycérides comprise entre 10 et 35 %,
- une quantité de monoglycérides comprise entre 1 et 5 %.

La composition selon l'invention présente donc un excellent profil en acides gras avec une teneur en acides gras polyinsaturés oméga-3 élevée et une teneur en acides gras saturés très faible. Elle présente de plus une excellente biodisponibilité, en privilégiant les formes chimiques les plus efficaces.

Avantageusement, la teneur en acides gras saturés de la composition selon l'invention est inférieure ou égale à 30 mg/g de composition, et préférentiellement inférieure ou égale à 25 mg/g de composition.

La composition d'huile peut être obtenue à partir de micro-algues du genre Thraustochytrium, Schizochytrium, Nannochloropsis, Isochrysis, Phaeodactylum, Nitzchia, Staurosira, Crypthecodinium ou Ulkenia.

Les micro-algues des genres Thraustochytrium et Schizochytrium permettront d'obtenir une composition d'huile enrichie en acide docosahexaénoïque (DHA).

Les micro-algues des genres Nannochloropsis, Isochrysis, Phaeodactylum ou Nitzchia permettront d'obtenir une composition d'huile enrichie en acide eicosapentaénoïque (EPA).

Au sens de l'invention, on entend par « enrichie en acides gras polyinsaturés » une composition comprenant, après mise en œuvre de procédés de concentration adaptés, plus du double de la quantité d'acides gras polyinsaturés que présentait la composition initialement.

Préférentiellement, la composition comprend une quantité de triglycérides comprise entre 40 et 67 %, plus préférentiellement entre 55 et 65 %, par rapport à la quantité totale de monoglycérides, diglycérides, triglycérides et esters éthyliques d'acides gras.

Préférentiellement encore, la composition comprend entre 25 et 35% de diglycérides par rapport à la quantité totale de monoglycérides, diglycérides, triglycérides et esters éthyliques d'acides gras.

Préférentiellement encore, la composition comprend entre 1 et 2 % de monoglycérides par rapport à la quantité totale de monoglycérides, diglycérides, triglycérides et esters éthyliques d'acides gras.

Dans le cadre de l'invention, la quantité d'esters éthyliques est inférieure à 2% par rapport à la quantité totale de monoglycérides, diglycérides, triglycérides et esters éthyliques d'acides gras.

Selon un premier mode de réalisation, la composition comprend une teneur en DHA supérieure ou égale à 600 mg/g de composition, plus préférentiellement supérieure à 700 mg/g de composition.

Selon un second mode de réalisation, la composition comprend une teneur en EPA supérieure ou égale à 600 mg/g de composition, préférentiellement supérieure à 700 mg/g de composition.

Selon le premier mode de réalisation de l'invention, la composition comprend au moins 4 mg/g de composition d'acide eicosatétraénoïque oméga-3, préférentiellement entre 4 et 8 mg/g de composition.

Si les acides gras polyinsaturés appartenant à la famille des omégas-3 ont fait l'objet de nombreuses études et publications scientifiques depuis plusieurs années, celles-ci ne concernaient en réalité que majoritairement l'EPA et le DHA. Aujourd'hui, l'intérêt de la communauté scientifique se tourne vers d'autres omégas-3, lesquels ont probablement des rôles clés et indépendants dans de nombreux mécanismes physiologiques. Ceci est par exemple le cas de l'acide eicosatétraénoïque oméga-3 (ETA). Cet acide gras a été identifié il y a près de 20 ans à travers les études de Careaga et Sprecher (Metabolism of 8,11,14,17-eicosatetraenoic acid by human platelet lipoxygenase and cyclooxygenase. Biochimica et Biophysica Acta, Volume 920, p94-101.) et de Croset et al. (Inhibition of Prostaglandin H

Synthase and Activation of 12-Lipoxygenase by 8,11,14,17- Eicosatetraenoic Acid in Human Endothelial Cells and Platelets. Biochemical Pharmacology, Volume 57, p631-638). Ces études ont mis en évidence un effet anti-inflammatoire de l'acide eicosatétraénoïque, une réduction de la formation de composés pro-inflammatoires ainsi qu'un effet inhibiteur de l'agrégation plaquettaire.

Il s'en suit que l'acide eicosatétraénoïque serait une bonne alternative aux inhibiteurs anti-inflammatoires non stéroïdiens tels que l'aspirine ou l'indometatacine.

La composition selon l'invention est donc clairement avantageuse, car elle propose, une quantité non négligeable d'acide eicosatétraénoïque oméga-3.

Selon le premier mode de réalisation de l'invention encore, la composition comprend une teneur en acide docosapentaénoïque (DPA) oméga-6 inférieure ou égale à 140 mg/g de composition, préférentiellement comprise entre 70 et 140 mg/g de composition.

Une composition d'huile de micro-organismes présentant les caractéristiques décrites précédemment peut être préparée par un procédé comprenant
(i) une étape de réaction entre une huile de micro-organismes comprenant des acides gras polyinsaturés oméga-3 sous forme de triglycérides et un alcool en présence d'un catalyseur chimique ou enzymatique,
(ii) une étape de concentration en acide gras polyinsaturés oméga-3 par distillation moléculaire sous vide poussé dans un évaporateur à film raclé couplé à une colonne de rectification comportant au moins sept plateaux théoriques,
(iii) une étape de restructuration de monoglycérides, diglycérides et triglycérides d'acide gras polyinsaturés oméga-3 en présence d'enzyme et de glycérol,
(iv) une étape de distillation moléculaire court trajet sous vide.

Dans les huiles naturelles, les acides gras polyinsaturés oméga-3 sont essentiellement sous la forme de triglycérides, c'est-à-dire estérifiés sur le squelette glycérol. Une méthode pour concentrer ces acides gras consiste alors dans un premier temps à les libérer du glycérol. L'étape (i) de réaction entre l'huile et un alcool en présence d'un catalyseur est une étape de transestérification qui va permettre l'obtention des acides gras sous une forme d'esters éthyliques (EE).

De manière préférée, la réaction de transestérification est réalisée avec de l'éthanol à titre d'alcool et de l'éthylate de sodium à titre de catalyseur.

Le rapport en poids huile/éthanol/catalyseur est préférentiellement de 1 : moins de 0,5 : moins de 0,05.

Cette réaction se conduit à une température comprise entre 40 et 120 °C, préférentiellement entre 40 et 60°, durant un temps compris entre 1 et 12h, préférentiellement entre 1 à 2 h.

A la fin de la réaction, plus de 95 % des acides gras sont sous la forme d'esters éthyliques.

Les éthyles esters d'acides gras formés peuvent alors être distillés par distillation moléculaire pour en recueillir la fraction concentrée en acides gras polyinsaturés d'intérêt lors de l'étape (ii).

La distillation sous vide poussé permet la séparation des esters éthyliques en fonction de leur volatilité. Celle-ci dépend de leur poids moléculaire et de la longueur des chaines des acides gras.

Ainsi dans le but de concentrer la composition d'huile en acides gras polyinsaturés d'intérêt tel que le DHA ou l'EPA, cette étape va permettre d'éliminer au maximum les acides gras dont la chaine comporte moins de 20 atomes de carbone.

De manière importante, la distillation moléculaire est réalisée dans un évaporateur à film raclé couplé à une colonne de rectification comportant au moins sept plateaux théoriques. L'utilisation de la colonne de rectification permet de diminuer la quantité d'acides gras saturés dans le résidu de distillation et d'améliorer la capacité séparative.

D'autre part, en raison du haut degré de poly-insaturation des acides gras d'intérêt et donc de leur grande sensibilité à l'oxydation, une distillation sous vide poussé est nécessaire. Les paramètres appliqués doivent prévenir du risque d'isomérisation de l'EPA ou du DHA.

Les paramètres de distillation sont donc généralement, dans le cadre de l'invention, les suivants :
Vide de distillation de 0,01 à 0,20 mbar,
Température dans l'évaporateur à film raclé de 190 à 240°,
Température dans le haut de colonne de 130 à 200°C.

A l'issue de cette étape, on obtient un raffinat riche en esters d'acides gras à chaines longues et un distillat riche en esters d'acides gras à chaines courtes.

Les esters éthyliques d'acides gras sont ensuite convertis lors d'une étape (iii) de ré-estérification sous forme de triglycérides, de monoglycérides et de diglycérides, des formes présentant une meilleure biodisponibilité comme expliqué précédemment.

Préférentiellement, l'enzyme utilisée lors de cette étape est une lipase, avantageusement une lipase B de *Candida antarctica.*

Cette réaction se conduit à une température comprise entre 40 et 60°C, durant un temps compris entre 15 et 30h, préférentiellement entre 20 et 25 h.

L'étape (iii) de restructuration des monoglycérides, diglycérides et triglycérides est suivie d'une étape (iv) de distillation moléculaire à court trajet et sous vide poussé pour éliminer les esters éthyliques résiduels, les composés volatiles odorant mais également pour inactiver une potentielle activité enzymatique résiduelle. Cette étape permet de concentrer d'avantage la composition en monoglycérides, diglycérides et triglycérides.

Selon un mode de réalisation, le procédé comprend de plus, les étapes suivantes ultérieures de (v) désodorisation et/ou (vi) ajout d'antioxydants.

L'étape de désodorisation (v) est une étape optionnelle qui se déroule en présence de vapeur. Sa mise en œuvre fait suite à l'étape (iv) de distillation moléculaire. La vapeur d'eau entraine des molécules qui n'ont pas été éliminées à l'étape (iv) de distillation moléculaire. Le degré de poly-insaturation des huiles obtenues étant très élevé, l'utilisation d'un évaporateur à film raclé avec injection de vapeur sèche sous vide de moins de 1 mbar permet une désodorisation avec un temps de résidence court de moins d'une minute. Les indices d'oxydation, de peroxydes (IP) et d'anisidine (lan) sont également abaissés par ce procédé.

L'étape (vi) d'ajout d'antioxydants est une étape également optionnelle qui a pour but d'améliorer la résistance à l'oxydation de la composition. Des antioxydants tels que le palmitate d'ascorbyle, l'extrait de romarin, les phospholipides, le tocophérol ou tout autre antioxydant connu de l'homme du métier peuvent être utilisés.

La présente description décrit également un complément alimentaire ou une composition pharmaceutique, nutraceutique ou alimentaire, en particulier une composition alimentaire infantile, comprenant une composition telle que décrite précédemment.

Un complément alimentaire peut être une gélule, une capsule molle, un comprimé, une poudre, un gel, un sirop ou toute autre forme connue de l'homme du métier.

Une composition pharmaceutique, nutraceutique ou alimentaire peut être une composition solide, liquide ou un gel, adapté à la personne adulte, à l'enfant ou au nourrisson. Une telle composition pourra comprendre d'autres composés tels que des protéines et des glucides. L'invention sera mieux comprise à la lecture des exemples qui suivent.

### Exemple 1 : concentration d'une huile de micro-algues en DHA majoritairement sous forme de monoglycérides, diglycérides et triglycérides.

Cet exemple illustre le procédé décrit ci-dessus et est mis en œuvre à partir d'une huile brute produite par la souche de micro-algues Schizochytrium sp T18 commercialisée par la société Mara Renewables Corporation.

L'huile contient initialement 329 mg/g de DHA. L'objectif est ici d'au minimum doubler la concentration en DHA.

### Etape (i) : transestérification

Une réaction de transestérification est réalisée sur une biomasse de 1800 kg d'huile de micro-algues à l'aide de 450 kg d'éthanol et de 21,6 kg d'éthylate de sodium, dans un réacteur approprié.

La température de réaction est de 50°C et le temps de réaction est de 1h. A l'issue de la réaction, l'excès d'éthanol est évaporé sous vide, puis le mélange est refroidi à une température d'environ 30°C puis soumis à décantation durant 1h. La phase légère est récupérée puis le glycérol est vidangé. Une seconde décantation est réalisée durant 30 sec. Le glycérol et les monoglycérides résiduels sont vidangés.

Un lavage à l'eau acide est ensuite réalisé en ajoutant 17% d'eau déminéralisée contenant 2,5% d'acide phosphorique (75%) sous agitation durant 20 sec. Le mélange est décanté durant 20 sec et la phase aqueuse est vidangée. Il s'en suit un séchage sous vide (pression < 90 mbar) à 60°C durant un temps supérieur à 2h.

A l'issue de cette étape l'huile contient 329 m/g de DHA sous forme d'esters éthyliques.

### Etape (ii) : concentration en DHA par distillation moléculaire

L'huile est ensuite conduite dans un dégazeur puis traverse un évaporateur à film raclé. Les vapeurs sont ensuite distillées au travers d'une colonne de rectification qui est couplée à l'évaporateur fourni par la société UIC GmbH. Un reflux du distillat, c'est-à-dire une réintroduction du distillat dans la colonne peut permettre d'augmenter l'efficacité séparative de cette dernière. La colonne utilisée contient environ sept plateaux théoriques. Le résidu de distillation est récupéré et représente la fraction enrichie en DHA.

Les conditions opérationnelles sont les suivantes : T° de l'évaporateur : 225°C ; Vide de la colonne de rectification : 0,1 mbar ; Taux de reflux 75%, T° (haut de colonne) : 195°C.

Le Tableau 1 ci-dessous compare le profil en acides gras de l'huile obtenue après cette étape (ii) avec le profil en acides gras initial avant la première étape (i). Les quantités sont exprimées en mg de chaque acide gras par g d'huile.

**[Table.1]**

| | Composition en acides gras avant étape (i) | Composition en acides gras après étape (ii) |
|---|---|---|
| C4 :0 | 1,867 | - |
| C6 :0 | 1,808 | - |
| C12 :0 | 7,542 | - |
| C14 :0 | 89,582 | 4,428 |
| C15 :0 | 2,478 | - |
| C16 :0 | 153,76 | 10,206 |
| C16 :1 | 69,696 | 5,611 |
| C18 :0 | 6,133 | - |
| C18 :1 n9 cis | 19,555 | 8,442 |
| C18 :1 n7 cis | 89,271 | 17,745 |
| C18 :2 n6 cis | 10,651 | 3,487 |
| C20 :4 n3 | 3,055 | 5,572 |
| EPA | 11,294 | 18,856 |
| C22 :5 n6 | 55,904 | 125,453 |
| DHA | 329,162 | 757,958 |

Plus de 97% du DHA est conservé dans le résidu récupéré. La quantité de DHA est passée de 329 mg/g de DHA sous forme d'esters éthyliques à 758 mg/g. Les conditions opératoires ont été réglées en vue de conserver au maximum le DHA et de faire une coupure au C20 tout en conservant au mieux l'ETA C20 :4 n-3. L'ETA oméga-3 passe alors de 3 à plus de 5 mg/g. Dans ces conditions opératoires, L'EPA est également concentré mais reste à des valeurs relativement faibles. Le DPA n-6, très proche du DHA, est obligatoirement concentré mais cependant les concentrations atteintes restent limitées.

La quantité d'acides gras saturés dans le résidu est minime. L'acide palmitique C16 :0 par exemple est quasiment éliminé dans le résidu. On note que seulement 2,5% de sa teneur initiale sont conservés.

### Etape (iii) : synthèse de triglycérides, diglycérides et monoglycérides

La réaction a lieu dans un réacteur en présence d'enzyme immobilisée. Il s'agit d'une lipase de la fraction B de *Candida antartica* (commercialisée sous le nom Lipozym 435 par la société Novozym).

480 g de résidu de distillation contenant environ 758mg/g de DHA, 33g de glycérol et 20g d'enzyme, sont introduits dans le réacteur.

La réaction s'opère sous agitation modérée, à température contrôlée autour de 60°C, sous vide avec évaporation et condensation de l'éthanol généré. Le temps de réaction est de 25h.

Le rendement de la réaction est de plus de 95%.

A l'issue de cette étape, l'huile présente le profil glycéridique suivant (Tableau 2) :

**[Table.2]**

| Ethyls esters | Monoglycérides | Diglycérides | Triglycérides |
|---|---|---|---|
| 8.6% | 5.7% | 35.8% | 49.9% |

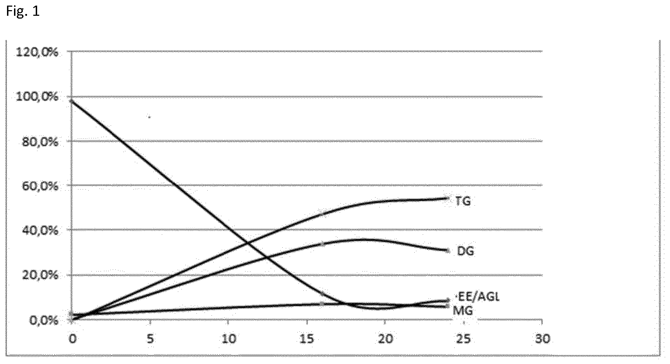

[Fig. 1] illustre la cinétique de conversion du DHA sous forme d'esters éthyliques en mono, di, et triglycérides au cours du temps.

### Etape (iv) : Distillation moléculaire court trajet

Après synthèse, le produit est repris pour passage en distillateur à court trajet (commercialisé par la société UIC GmbH) pour éliminer les esters éthyliques résiduels, les volatiles odorant mais également pour inactiver une potentielle activité enzymatique résiduelle.

Les conditions sont une température des parois de l'évaporateur comprise entre 160 et 220° C et un vide inférieur à 0,02 mbar. De préférence le vide est de 0,005 mbar pour permettre d'abaisser la température de distillation.

A l'issue de cette étape, l'huile présente le profil indiqué dans le Tableau 3 :

**[Table.3]**

| **Composés** | **Unités** | **Valeurs (Exemple 1)** |
|---|---|---|
| **DHA** | mg/g | 758 |
| **Acides gras saturés (AGS)** | mg/g | 15 |
| **Triglycérides (TG)** | % | 63 |
| **Diglycérides (DG)** | % | 36 |
| **Monoglycérides (MG)** | % | 2 |
| **Ethyles esters/acides gras libres (EE/AGL)** | mg/g | 1,2 |
| **EPA** | mg/g | 20 |
| **ETA n-3** | mg/g | 6 |
| **DPA n-6** | mg/g | 105 |

### Etape (vi) : Désodorisation

L'huile est acheminée dans un évaporateur à film raclé dans lequel de la vapeur sèche est injectée. La réaction se déroule durant un temps de résidence court de moins d'une minute et sous un vide de moins de 1mbar.

### Étape (vi) : ajout d'antioxydants

L'huile est rendue stable face à l'oxydation par l'ajout d'antioxydant tels que le palmitate d'ascorbyle, extrait de romarin, phospholipides, tocophérol ou tout autre antioxydant connu de l'homme du métier.

## Revendications

1. Composition d'huile de micro-organismes enrichie en acides gras polyinsaturés, **caractérisée**
**en ce qu'**elle présente :
- une teneur en acides gras saturés inférieure ou égale à 40 mg/g de composition,
- une teneur en acides gras polyinsaturés oméga-3 supérieure ou égale à 500 mg/g de composition,
et **en ce qu'**elle comprend, par rapport à la quantité totale de monoglycérides, diglycérides, triglycérides et esters éthyliques d'acides gras :
- une quantité de triglycérides comprise entre 40 et 67 %,
- une quantité de diglycérides comprise entre 10 et 35 %,
- une quantité de monoglycérides comprise entre 1 et 5 %.

2. Composition selon la revendication 1, **caractérisée en ce que** la teneur en acides gras saturés est inférieure ou égale à 30 mg/g de composition, préférentiellement inférieure ou égale à 25 mg/g de composition.

3. Composition selon l'une des revendications précédentes, **caractérisée en ce qu'**elle comprend une quantité de triglycérides comprise entre 55 et 65 %, par rapport à la quantité totale de monoglycérides, diglycérides, triglycérides et esters éthyliques d'acides gras.

4. Composition selon l'une des revendications précédentes, **caractérisée en ce qu'**elle comprend entre 25 et 35% de diglycérides par rapport à la quantité totale de monoglycérides, diglycérides, triglycérides et esters éthyliques d'acides gras.

5. Composition selon l'une des revendications précédentes, **caractérisée en ce qu'**elle comprend entre 1 et 2 % de monoglycérides par rapport à la quantité totale de monoglycérides, diglycérides, triglycérides et esters éthyliques d'acides gras.

6. Composition selon l'une des revendications précédentes, **caractérisée en ce qu'**elle comprend une teneur en acide docosahexaénoïque supérieure ou égale à 600 mg/g de composition, plus préférentiellement supérieure à 700 mg/g de composition.

7. Composition selon l'une des revendications 1 à 5, **caractérisée en ce qu'**elle comprend une teneur en acide eicosapentaénoïque supérieure ou égale à 600 mg/g de composition, préférentiellement supérieure à 700 mg/g de composition.

8. Composition selon l'une des revendications 1 à 6, **caractérisée en ce qu'**elle comprend au moins 4 mg/g de composition d'acide eicosatétraénoïque oméga-3, préférentiellement entre 4 et 8 mg/g de composition.

9. Composition selon l'une des revendications 1 à 6 et 8 **caractérisée en ce qu'**elle comprend une teneur en acide docosapentaénoïque oméga-6 inférieure ou égale à 140 mg/g de composition, préférentiellement comprise entre 70 et 140 mg/g de composition.

10. Composition selon l'une des revendications précédentes, **caractérisée en ce qu'**elle se présente sous la forme d'un complément alimentaire, d'une composition pharmaceutique, nutraceutique, alimentaire, notamment infantile.

## Patentansprüche

1. Mikroorganismenöl-Zusammensetzung, die mit mehrfach ungesättigten Fettsäuren angereichert ist, **dadurch gekennzeichnet, dass** sie Folgendes aufweist:
- einen Gehalt an gesättigten Fettsäuren von weniger als oder gleich 40 mg/g der Zusammensetzung,
- einen Gehalt an mehrfach ungesättigten Omega-3-Fettsäuren von mehr als oder gleich 500 mg/g der Zusammensetzung,
und dadurch, dass sie im Verhältnis zur Gesamtmenge an Monoglyceriden, Diglyceriden, Triglyceriden und Fettsäureethylestern Folgendes umfasst:
- eine Menge an Triglyceriden zwischen 40 und 67 %,
- eine Menge an Diglyceriden zwischen 10 und 35 %,
- eine Menge an Monoglyceriden zwischen 1 und 5 %.

2. Zusammensetzung nach Anspruch 1, **dadurch gekennzeichnet, dass** der Gehalt an gesättigten Fettsäuren weniger als oder gleich 30 mg/g der Zusammensetzung, vorzugsweise weniger als oder gleich 25 mg/g der Zusammensetzung beträgt.

3. Zusammensetzung nach einem der vorhergehenden Ansprüche, **dadurch gekennzeichnet, dass** sie eine Menge an Triglyceriden zwischen 55 und 65 % im Verhältnis zur Gesamtmenge an Monoglyceriden, Diglyceriden, Triglyceriden und Fettsäureethylestern umfasst.

4. Zusammensetzung nach einem der vorhergehenden Ansprüche, **dadurch gekennzeichnet, dass** sie zwischen 25 und 35 % Diglyceride im Verhältnis zur Gesamtmenge an Monoglyceriden, Diglyceriden, Triglyceriden und Fettsäureethylestern umfasst.

5. Zusammensetzung nach einem der vorhergehenden Ansprüche, **dadurch gekennzeichnet, dass** sie zwischen 1 und 2 % Monoglyceride im Verhältnis zur Gesamtmenge an Monoglyceriden, Diglyceriden, Triglyceriden und Fettsäureethylestern umfasst.

6. Zusammensetzung nach einem der vorhergehenden Ansprüche, **dadurch gekennzeichnet, dass** sie einen Gehalt an Docosahexaensäure von mehr als oder gleich 600 mg/g der Zusammensetzung, besser noch mehr als 700 mg/g der Zusammensetzung umfasst.

7. Zusammensetzung nach einem der Ansprüche 1 bis 5, **dadurch gekennzeichnet, dass** sie einen Gehalt an Eicosapentaensäure von mehr als oder gleich 600 mg/g der Zusammensetzung, vorzugsweise mehr als 700 mg/g der Zusammensetzung umfasst.

8. Zusammensetzung nach einem der Ansprüche 1 bis 6, **dadurch gekennzeichnet, dass** sie mindestens 4 mg/g der Zusammensetzung an Omega-3-Eicosatetraensäure umfasst, vorzugsweise zwischen 4 und 8 mg/g der Zusammensetzung.

9. Zusammensetzung nach einem der Ansprüche 1 bis 6 und 8, **dadurch gekennzeichnet, dass** sie einen Gehalt an Omega-6-Docosapentaensäure von weniger als oder gleich 140 mg/g der Zusammensetzung, vorzugsweise zwischen 70 und 140 mg/g der Zusammensetzung umfasst.

10. Zusammensetzung nach einem der vorhergehenden Ansprüche, **dadurch gekennzeichnet, dass** sie in Form eines Nahrungsergänzungsmittels, einer pharmazeutischen, nutrazeutischen oder Nahrungsmittelzusammensetzung, insbesondere für Kinder, vorliegt.

## Claims

1. Microorganism oil composition enriched in polyunsaturated fatty acids, **characterized in that** it has:
- a saturated fatty acid content less than or equal to 40 mg/g of composition,
- a content of omega-3 polyunsaturated fatty acids greater than or equal to 500 mg/g of composition,
and **in that** it comprises, relative to the total amount of monoglycerides, diglycerides, triglycerides and ethyl esters of fatty acids:
- an amount of triglycerides of between 40 and 67%,
- an amount of diglycerides between 10 and 35%,
- an amount of monoglycerides between 1 and 5%.

2. Composition according to claim 1, **characterized in that** the saturated fatty acid content is less than or equal to 30 mg/g of composition, preferably less than or equal to 25 mg/g of composition.

3. Composition according to one of the preceding claims, **characterised in that** it comprises an amount of triglycerides of between 55 and 65%, relative to the total amount of monoglycerides, diglycerides, triglycerides and ethyl esters of fatty acids.

4. Composition according to one of the preceding claims, **characterised in that** it comprises between 55 and 65% diglycerides, relative to the total amount of monoglycerides, diglycerides, triglycerides and ethyl esters of fatty acids.

5. Composition according to one of the preceding claims, **characterised in that** it comprises between 1 and 2% monoglycerides, relative to the total amount of monoglycerides, diglycerides, triglycerides and ethyl esters of fatty acids.

6. Composition according to one of the preceding claims, **characterised in that** it comprises a docosahexaenoic acid content greater than or equal to 600 mg/g of composition, more preferably greater than 700 mg/g of composition.

7. Composition according to one of claims 1 to 5, **characterised in that** it comprises an eicosapentaenoic acid content greater than or equal to 600 mg/g of composition, preferably greater than 700 mg/g of composition.

8. Composition according to one of claims 1 to 6, **characterised in that** it comprises at least 4 mg/g of composition of omega-3 eicosatetraenoic acid, preferably between 4 and 8 mg/g of composition.

9. Composition according to one of claims 1 to 6, and 8, **characterised in that** it comprises an omega-6 docosapentaenoic acid content of less than or equal to 140 mg/g of composition, preferably between 70 and 140 mg/g of composition.

10. Composition according to one of the preceding claims, **characterised in that** it is in the form of a food supplement, a pharmaceutical, nutraceutical, or food composition, in particular for infants.
